# EUROPÄISCHE PATENTANMELDUNG

(11) **EP 1 266 811 A2**
(43) Veröffentlichungstag der Anmeldung: **18.12.2002**
(21) Anmeldenummer: 02011804.8
(22) Anmeldetag: 28.05.2002
(51) Int. Cl.: B60S 5/02, B67D 5/04

(54) **Anordnung zur Energieversorgung von Verbrauchern**

(30) Priorität: 16.06.2001 DE 10129096
(71) Anmelder: Ballard Power Systems AG, 73230 Kirchheim/Teck-Nabern (DE)
(72) Erfinder: Friebe, Peter, Dr., 73230 Kirchheim (DE); Zur Megede, Detlef, Dr., 73230 Kirchheim/Teck (DE)
(74) Vertreter: Beyer, Andreas, Dr.

(57) **Zusammenfassung**

Die Erfindung betrifft ein Anordnung zur Versorgung von mobilen Verbrauchern (1), welche einen bordeigenen Brennmitteltank (2) und ein Energieerzeugungssystem (4) aufweisen und einem Brennmittel (3) zum Betreiben des Energieerzeugungssystems (4). Dabei ist ein stationäres Entnahmemittel (9) zum Überführen von Brennmittel (3) aus einer stationären Brennmittelquelle (5) in den Brennmitteltank (2) vorgesehen, wobei das Entnahmemittel (9) Zuführmittel für Brennmittel (3) zum Verbraucher (1) aufweist und der Verbraucher (1) korrespondierende Aufnahmemittel (16) mit einem Tankanschluß (18) zum Aufnehmen von Brennmittel (3) aufweist. Weiterhin ist das Entnahmemittel (9) zusätzlich mit einem Mittel zur Stromaufnahme (12) und das Aufnahmemittel (16) zusätzlich einem korrespondierenden Mittel zur Stromabgabe (17) ausgestattet.

## Beschreibung

Die Erfindung betrifft eine Anordnung zur Energieversorgung von Verbrauchern gemäß dem Oberbegriff des unabhängigen Anspruchs.

Für den breiten Einsatz von Brennstoffzellenfahrzeugen ist eine ausreichende Zugänglichkeit und zugleich die Verbreitung der notwendigen Infrastruktur Voraussetzung. Beim Einsatz von methanolbetriebenen Brennstoffzellenfahrzeugen können Umbaumaßnahmen an Tankstellen notwendig werden, um Methanol anbieten zu können. Bei der Verwendung von wasserstoffbetriebenen Brennstoffzellenfahrzeugen ist eine ausreichende Wasserstoff-Infrastruktur notwendig, die auch für den privaten Betreiber des Brennstoffzellenfahrzeugs ohne großen Aufwand erreichbar ist.

Die Bereitstellung einer derartigen ausreichenden Infrastruktur zur Versorgung von Brennstoffzellenfahrzeugen ist kostenintensiv und zeitaufwendig. Dies bedeutet jedoch, daß die Erreichbarkeit einer entsprechend ausgerüsteten Tankstelle für Brennstoffzellenfahrzeuge möglicherweise nicht ausreichend gewährleistet ist. Darüber hinaus müssen in einer Übergangszeit, in der konventionell betriebene Fahrzeuge noch in großer Stückzahl zu versorgen sind, große Mengen an Vorräten von unterschiedlichsten Treibstoffen an Tankstellen vorgehalten werden. Dadurch wird eine Serieneinführung von brennstoffzellenbetriebenen Fahrzeugen erschwert und verteuert.

Aus der US 6,065,511 A1 ist ein Betankungssystem für Fahrzeuge bekannt, bei dem beispielsweise Nutzfahrzeuge mit einem Tankfahrzeug ähnlich wie Flugzeuge in der Luft von Tankflugzeugen betankt werden können. Dazu werden Fahrzeuge auf einem vorgegebenen Parkierareal abgestellt. Gleichzeitig wird ein Tankfahrzeug für dieses Areal angefordert und eine Bezahlung der Betankung initiiert. Das Fahrzeug kann betankt werden, während der Fahrer das Fahrzeug verlassen hat und anderen Tätigkeiten nachgeht oder sich erholt. Ebenso ist ein Fahrzeugservice möglich. Beim Verlassen des Areals erhält der Fahrer eine Aufstellung der Füllmenge und Kosten der Betankung.

Der Erfindung liegt die Aufgabe zugrunde, eine Anordnung zur Energieversorgung von Verbrauchern, insbesondere von Fahrzeugen, anzugeben, welche eine dezentrale Versorgung von Verbrauchern verfügbar macht.

Diese Aufgabe wird bei einer Anordnung mit den Merkmalen des Anspruchs 1 gelöst.

Der Vorteil der erfindungsgemäßen Lösung besteht darin, daß aufwendige Umbauten und Investitionen bei vorhandenen Tankstellen erspart werden, da vorhandene stationäre Systeme zur Betankung mobiler Verbraucher verwendet werden können. Gleichzeitig sind die erfindungsgemäßen Betankungsmöglichkeiten so weit verbreitet, daß diese gut erreichbar sind. Zusätzlich kann von einem Brennstoffzellenfahrzeug im Ruhezustand elektrische Energie in stationäre Systeme zurück gespeist werden, so daß eventuelle stationäre Verbrauchsspitzen durch dezentrale Rückspeisung durch Strom erzeugende Fahrzeuge abgedeckt werden kann.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen
- Fig. 1: eine schematische Ansicht einer bevorzugten Anordnung mit einem Brennstoffzellenfahrzeug und einer Brennmittelquelle,
- Fig. 2: eine bevorzugtes Entnahmemittel mit korrespondierendem fahrzeugseitgen Anschlußmittel und
- Fig. 3: eine Anordnung von brennstoffzellenbetriebenen Fahrzeugen.

Die Erfindung ist besonders für Brennstoffzellensysteme geeignet, welche mit Alkoholen, Kohlenwasserstoffen, Ether, Ester oder Wasserstoff versorgt werden, sie ist jedoch nicht auf diese Brennmittel eingeschränkt.

Brennstoffzellensysteme sind attraktive und kompakte Energieversorgungssysteme, die auch sehr gut für stationäre Verbraucher geeignet sind. Solche stationären Verbraucher können Großverbraucher wie etwa Kraftwerke sein oder auch Kleinverbraucher wie private Haushalte oder Geschäftsbetriebe, die mit elektrischer Energie aus Brennstoffzellensystemen versorgt werden. Diese benötigen zwangsläufig eine Versorgung, in Form von Vorratstanks für ein geeignetes Betriebsmittel oder eines Leitungsnetzes mit ausreichender Kapazität, welches ein geeignetes Brennmittel zu den stationären Verbrauchern transportiert.

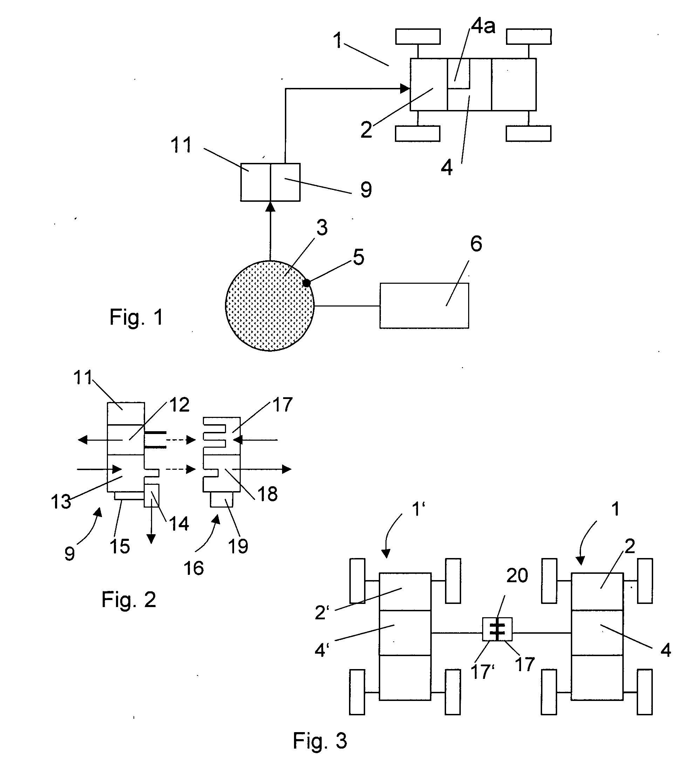

In der Figur 1 ist eine bevorzugte Ausgestaltung der Erfindung dargestellt. Ein Brennmitteltank 2 eines mobilen Verbrauchers 1 mit einem Brennstoffzellensystem 4 wird von einer stationären Brennmittelquelle 5 gespeist. Die stationäre, im ganzen als Brennmittelquelle 5 beschriebene Einheit versorgt einen stationären Verbraucher 6 mit einem Brennmittel 3, aus dem der stationäre Verbraucher 6 Wärme und/oder elektrischer Leistung gewinnt. Vorzugsweise ist der stationäre Verbraucher 6 ein Gebäude, besonders bevorzugt wird der stationäre Verbraucher 6 mit Brennmittel 3 zum Betreiben eines stationären Brennstoffzellensystems versorgt. Das bevorzugte stationäre Brennstoffzellensystem versorgt elektrische Verbraucher im Gebäude 6.

Die Brennmittelquelle 5 kann z.B. ein Speichertank sein, in dem ein Brennmittel 3 gespeichert ist, welches zur Gewinnung von Wasserstoff reformiert wird, etwa Alkohol wie Methanol oder Ethanol, Kohlenwasserstoff wie Erdgas oder Benzin, Ether wie Dimethylether, Ester oder andere geeignete wasserstoffhaltige Verbindungen. Das Fahrzeug 1 übernimmt das Brennmittel und reformiert dieses zur Wasserstoffgewinnung in der bordeigenen Gaserzeugungseinheit 4a, um einer Brennstoffzelleneinheit des bordeigenen Brennstoffzellensystems 4 Wasserstoff zur Verfügung zu stellen.

Die Brennmittelquelle 5 kann auch ein Wasserstofftank sein, in dem stationär Wasserstoff als Brennmittel 3 gespeichert ist, wobei eine bordeigene Reformierung erspart wird. Die Brennmittelquelle 5 kann eine stationäre Reformierungseinheit sein, womit stationär verfügbares Brennmittel zuerst reformiert und dann in Form von wasserstoffreichem Reformat als Brennmittel 3 in den Tank 2 des Fahrzeugs 1 gefüllt werden kann. Dabei kann auch eine Reformatreinigung stationär vorgesehen sein, oder an Bord des Fahrzeugs 1 vorgenommen werden.

Das Brennmittel 3 kann jedoch auch zur konventionellen Energieversorgung des stationären Verbrauchers 6 vorgesehen sein, wie etwa Erdgas oder Erdöl für eine übliche Wärme- und Heißwasserversorgung über einen durch die Brennmittelquelle 5 versorgten Heizkessel.

Der stationären Brennmittelquelle 5 ist ein Mittel 9 zur Entnahme von Brennmittel 3 zugeordnet, welches z.B. in der Art einer Zapfpistole das Brennmittel 3 in den bordeigenen Tank 2 überführt. Dem Entnahmemittel 9 ist eine Registriereinheit 11 zugeordnet, welche die Entnahme des Brennmittels 3 registriert und eine Form der Bezahlung ermöglicht, etwa ein Kartenleser für Geld-, Kunden- oder Kreditkarten.

Der Vorteil ist, daß die Versorgung von Brennstoffzellenfahrzeugen mit Brennmittel dezentral erfolgen kann. Brennstoffzellensysteme sind mittlerweile attraktive und kompakte Energieversorgungssysteme, die auch sehr gut für stationäre Verbraucher 6 geeignet sind. Solche stationären Verbraucher 6 können Großverbraucher wie etwa Kraftwerke sein oder auch Kleinverbraucher wie private Haushalte oder Geschäftsbetriebe, die mit elektrischer Energie aus Brennstoffzellensystemen versorgt werden. Diese benötigen zwangsläufig eine Versorgung, bevorzugt Vorratstanks für ein geeignetes Betriebsmittel 3. Die stationären Verbraucher selbst sind dezentral angeordnet, etwa in Wohnquartieren, Industriegebieten oder gemischten Wohn- und Gewerbegebieten. Die dort vorhandene Infrastruktur kann besonders vorteilhaft auch für die Versorgung von mobilen Verbrauchern genutzt werden. So kann ein Privathaushalt, dessen stationäre Energieversorgung über Brennstoffzellen erfolgt, ohne weiteres ein Brennstoffzellenfahrzeug betanken oder auch die Nachbarschaft mit Brennmittel 3 für deren Brennstoffzellenfahrzeuge versorgen. Dadurch ist gewährleistet, daß eine zuverlässige Infrastruktur zur dezentralen Versorgung von mobilen Verbrauchern 1 mit Brennmittel 3 eingerichtet und verfügbar gemacht ist, ohne daß ein aufwendiger Umbau und eine aufwendige Umrüstung von konventionellen Tankstellen für Benzin oder Diesel vorgenommen werden muß.

Besonders vorteilhaft ist es, das Entnahmemittel 9 mit einem Eingang zu versehen, um elektrische Leistung von einem mobilen Verbraucher 1 in das stationäre System des Verbrauchers 6 einzuspeisen, wobei der Verbraucher 6 auch ein kommunales Energieversorgungsnetz bzw. ein Energieversorgungsnetz eines kommerziellen Energieversorgers sein kann. Die elektrische Verbindung zum Einspeisen der Leistung kann dabei konduktiv über einen elektrischen Anschluß oder berührungslos, d.h. induktiv erfolgen.

Dazu kann die Registriereinheit 11 mit einem Zähler ausgerüstet sein, welche die Menge der eingespeisten elektrischen Energie mißt und z.B. als Gutschrift verrechnet. Vorteilhaft kann eine Verrechnung von entnommenem Brennmittel 3 gegen eingespeiste elektrische Leistung vorgenommen werden ("Brennmittel gegen Strom"). Besonders günstig ist es, das Fahrzeug 1 zusätzlich zu einem üblichen Kilometerzähler mit einem Betriebsstundenzähler auszustatten, der die Menge der zu einem stationären Verbraucher 6 eingespeisten elektrischen Leistung registriert und durch Gutschrift, Rabatt oder dergleichen verrechnet. Dabei kann für den mobilen, stromeinspeisenden Verbraucher 1 ein Guthabenkonto geführt werden, welches z.B. auf Reisen das Betanken des mobilen Verbrauchers 1 kostengünstig oder zu Lasten des Guthabenkontos erlaubt. Dies kann zweckmäßigerweise über den Betriebsstundenzähler abgeglichen werden. Eine solche Einspeisung kann im Prinzip auch durch andere Fahrzeuge, etwa Hybridfahrzeuge mit elektrischem Antriebsmotor, erfolgen.

Günstig ist, an einer Einspeisstelle für elektrische Energie, vorzugsweise etwa einer Entnahmestation 9, und/oder im Fahrzeug 1 Speichermittel und/oder Identifikationsmittel vorzusehen, welche geeignet sind, das einem stationären Entnahmemittel 9 entnommene Betriebsmittel 3 und die vom mobilen Verbraucher 1 eingespeiste elektrische Leistung einem jeweiligen Besitzer zuzuordnen und gegeneinander in geeigneter Weise zu verrechnen. So erlaubt diese Ausgestaltung ein z.B. Kraftstoffkonto für Reisen oder für einen stationären Eigenbedarf des Besitzers des Fahrzeugs 1.

Mit besonderem Vorteil können geparkte Fahrzeuge 1, z.B. von einem Parkplatz aus, für stationäre Verbraucher 6 Strom erzeugen, wenn diese Fahrzeuge 1 dabei gleichzeitig an die stationäre Brennmittelquelle 5 angeschlossen sind. In einer solchen Ausgestaltung kann die Anschlußleistung der stationären Anlagen kleiner ausfallen als wenn diese sich autark mit Strom versorgen müßten. Besonders vorteilhaft ist dies etwa für Einkaufszentren, Geschäftsbetriebe mit Firmenparkplätzen oder andere derartige Verbraucher, die stetig mit Besuchern beaufschlagt sind, die vorzugsweise mit Fahrzeugen 1 anreisen. Die jeweilige stationäre Anschlußleistung müßte dann nur eine Grundlast abdecken, da Leistungsspitzen durch die Einspeisung elektrischer Leistung von Besucherfahrzeugen abgedeckt werden können. Vorteilhaft ist hier, daß der Energiebedarf solcher Zentren zu Geschäftszeiten deutlich höher ist als bei Betriebsruhe und bei Zeiten mit erhöhtem Energiebedarf auch eine große Anzahl von Fahrzeugen 1 verfügbar ist.

In einer bevorzugten weiteren Ausgestaltung der Erfindung ist dem Entnahmemittel 9 ein Regelsystem zugeordnet, welches den Strombedarf des stationären Verbrauchers 6 mißt und an ein geparkte Fahrzeug 1 oder mehrere Fahrzeuge 1 eine entsprechende Leistungsanforderung abgibt. Das jeweilige bordeigene Brennstoffzellensystem 4 gibt eine entsprechende elektrische Leistung ab. Zweckmäßigerweise wird gleichzeitig der bordeigene Tank 2 aus der Brennmittelquelle 5 gefüllt.

Kommt ein weiteres Fahrzeug 1 hinzu oder fährt eines weg, werden das aktuelle Angebot an elektrischer Energie und Bedarf an elektrischer Energie neu ermittelt und eingeregelt. Schwankungen im Strombedarf des stationären Verbrauchers 6 können auf mehrere derartige Fahrzeuge 1 verteilt werden, um die Dynamik zu glätten. Optional kann eins oder können mehrere Fahrzeuge 1 rein dynamisch gefahren werden, während alle weiteren an das Regelsystem und die Brennmittelquelle 5 angeschlossenen Fahrzeuge 1 auf einem günstigen Betriebspunkt gehalten werden, um den Regelaufwand zu minimieren. Zweckmäßigerweise ist in den Fahrzeugen 1 ein Stromzähler vorgesehen, der mit dem Entnahmemittel 9 gekoppelt ist, so daß das verbrauchte Brennmittel 3 automatisch wieder zugetankt werden kann. Der Stromzähler kann jedoch auch stationär installiert sein. Weiterhin kann das Regelsystem auch Rechnermittel umfassen, welche ein Guthaben für den stromeinspeisenden mobilen Verbraucher 1 speichert und gegebenenfalls gegen Verrechnung von Brennmittelentnahmen aus einer Entnahmestation 9 aktualisiert.

Dabei kann es zum Ausgleich der Betriebskosten und als Anreiz für Fahrzeughalter günstig sein, mehr Brennmittel 3 zur Verfügung zu stellen, als für die stationäre Einspeisung verbraucht wird, oder vom Gebäudebetreiber ein Guthaben als Kraftstoffguthaben oder in Form von Geld dem Fahrzeughalter ausbezahlt oder für ihn gespeichert werden. Besonders günstig ist eine Einrichtung, die einen Tausch von Strom gegen Brennmittel auch überregional erlaubt.

Ein bevorzugtes Entnahmemittel 9 ist schematisch in Fig. 2 dargestellt. Das bevorzugte Entnahmemittel 9 weist eine Steckverbindung auf, welche ein einfaches An- und Abdocken eines Fahrzeugs 1 an das Entnahmemittel 9 bzw. die Brennmittelquelle 5 ohne große Montagetätigkeit erlaubt. Die Steckverbindung umfasst eine Stromzuführung 12 zum Einspeisen von elektrischer Leistung vom Fahrzeug 1 zum stationären Verbraucher 6 und/oder in ein Energieversorgungsnetz, eine Brennmittelzuleitung 13 zum Überführen des Brennmittels 3 von der Brennmittelquelle 5 in den Tank 2, optional eine Abgasleitung 14 zum Absaugen von beim Tanken austretendem Brennmittel 3 und vorzugsweise ein Identifikationsmittel 15 für das Fahrzeug 1 und/oder das Entnahmemittel 9.

Entsprechend weist das Fahrzeug 1 korrespondierende Anschlußmittel 16 für Brennmittelentnahme und Stromeinspeisung auf, nämlich ein Stromabgabemittel 17 zum Einspeisen von elektrischer Leistung vom Fahrzeug 1 zum stationären Verbraucher 6 oder in ein Energieversorgungsnetz, eine für die Brennmittelzuleitung passende Tanköffnung 18 zum Überführen des Brennmittels 3 von der Brennmittelquelle 5 in den Tank 2, sowie zweckmäßigerweise ein Identifikationsmittel 19 für das Fahrzeug 1 und/oder das Entnahmemittel 9. Die elektrischen Mittel 12, 17 und die Brennmittelanschlüsse 13, 18 können auch getrennt voneinander ausgebildet sein, um die Gefahr einer Funkenbildung zu vermindern. Dem Entnahmemittel 9 kann zweckmäßigerweise ein Registriermittel 11 zugeordnet sein. Günstig ist, zusätzlich Absaugung für austretendes Brennmittel eine Absaugung für austretende Abgase vorzusehen. Dies ist besonders in Parkhäusern oder anderen Orten mit besonders hohen Anforderungen an eine saubere und/oder sichere Umgebung zweckmäßig.

Der besondere Vorteil einer solchen Anordnung ist, daß das bordeigene Brennstoffzellensystem 4 auch im geparkten Zustand aktiv und auf Betriebstemperatur sein kann, so daß eine Kaltstartproblematik gerade bei tiefen Umgebungstemperaturen etwa nach einem langen Arbeitstag entfällt. Es ist kein Kaltstart notwendig, das Fahrzeug ist vielmehr sofort betriebsbereit.

Besonders bei Fahrzeugflotten, wie Stadtbusse oder Fuhrbetriebe, können Fahrzeuge, die gerade nicht im Einsatz sind, bei Pausen und Nachts, zur Deckung des Spitzenbedarfs an elektrischer Leistung von Haushalten an das regionale Stromnetz angeschlossen werden. Die ausgesprochen gute Dynamik von Fahrzeugen 1 mit bordeigenen Brennstoffzellensystemen 4 und das gegenseitige Entlasten einer größeren Anzahl von fahrzeugbasierten Stromeinspeisern kann den gesamten Stromerzeugungs-Wirkungsgrad erhöhen und schafft Redundanz. Eine bessere Verfügbarkeit ist durch mehrere voneinander unabhängige Systeme gegeben. Besonders vorteilhaft ist z.B. die fahrzeugbasierte Stromeinspeisung durch Nutzfahrzeuge, die etwa auf einem Rastplatz Station machen und dort elektrische Leistung des bordeigenen Brennstoffzellensystems 4 in stationäre Systeme einspeisen. Damit wäre eine nahezu hundertprozentige Auslastung eines Fuhrbetriebs möglich, da in den Zeiten des Fahrzeügstillstands dieses zwar nicht fährt, aber elektrische Energie gewinnbringend zur Verfügung stellt.

Mit besonderem Vorteil läßt sich das fahrzeugseitige Anschlußmittel 12 als Starthilfe oder zum "unterstützten Abschleppen" eines havarierten Fahrzeugs 1' verwenden. Dies ist in Fig. 3 dargestellt. Wenn die Stromkontakte 17, 17' eines helfenden Fahrzeugs 1 und eines Havaristen 1' verbunden sind, etwa mit Hilfe eines passenden Zwischenstücks 20, kann des bordeigene Brennstoffzellensystem 4 des helfenden Fahrzeugs 1 dem Havaristen 1' die elektrische Energie zum Starten dessen Systems, etwa für Kompressorleistung, Dosierpumpen, elektrische Heizung und dergleichen, zur Verfügung stellen. Aus dem Stromabgabe-Anschluß 17, 17' wird dann insgesamt ein Starterkabel für Brennstoffzellensysteme.

Zum unterstützten Abschleppen eines Havaristen 1' mit beschädigtem Brennstoffzellensystem 4' kann so das beschädigte Brennstoffzellensystem 4' überbrückt werden und das Brennstoffzellensystem 4 des abschleppenden Fahrzeugs 1 speist den elektrischen Antrieb des Havaristen 1'. Das übliche Abschleppseil bzw. die Abschleppstange wird durch ein Abschleppkabel ersetzt, das zudem noch elektronisch Bremsimpulse zu dem geschleppten Fahrzeug 1' übermitteln kann.

Die erfindungsgemäße Lösung könnte die bisherige Tankstelleninfrastruktur ergänzen und ersetzen, besonders dann, wenn dezentrale, stationäre Energieversorgungseinheiten auf der Basis von Brennstoffzellen eingesetzt werden. Diese Einheiten können für größere Gebäude, wie Wohnblöcke, Geschäftsgebäude etc., aber auch für Einfamilienhäuser vorgesehen werden. Für den Betrieb müssen auch diese Einheiten 6 mit einem Brennmittel 3 versorgt werden. Bei Einfamilienhäusern ist eine Versorgung mit Tankfahrzeugen möglich. Bei größeren Einheiten ist eine direkte Versorgung über ein Leitungsnetz, etwa eine Erdgasversorgung, denkbar. Die Erfindung erlaubt die Nutzung eines für stationäre Verbraucher bestehenden und gut ausgebauten Versorgungsnetzes auch für die Versorgung von mobilen Verbrauchern 1 mit Brennstoffzellensystemen mit einem Brennmittel 3.

## Patentansprüche

1. Anordnung zur Versorgung von mobilen Verbrauchern (1, 1'), welche einen bordeigenen Brennmitteltank (2, 2') und ein Energieerzeugungssystem (4, 4') aufweisen, mit zumindest einem Brennmittel (3) zum Betreiben des Energieerzeugungssystems (4, 4'), **dadurch gekennzeichnet,**
**daß** ein stationäres Entnahmemittel (9) zum Überführen von Brennmittel (3) aus einer stationären Brennmittelquelle (5) in den Brennmitteltank (2, 2') vorgesehen ist, wobei das Entnahmemittel (9) Zuführmittel (13) für Brennmittel (3) zum Verbraucher (1, 1') aufweist, daß der Verbraucher (1, 1') korrespondierende Aufnahmemittel (16) mit einem Tankanschluß (18) zum Aufnehmen von Brennmittel (3) aufweist und daß das Entnahmemittel (9) zusätzlich mit einem Mittel zur Stromaufnahme (12) und das Aufnahmemittel (16) zusätzlich einem korrespondierenden Mittel zur Stromabgabe (17) ausgestattet ist.

2. Anordnung nach Anspruch 1,
**dadurch gekennzeichnet,**
**daß** dem Entnahmemittel (9) Registriermittel (11) zum Registrieren einer Menge von entnommenem Brennmittel (3) zugeordnet sind.

3. Anordnung nach Anspruch 1,
**dadurch gekennzeichnet,**
**daß** das Entnahmemittel (9) und/oder das Aufnahmemittel (16) zusätzlich ein Identifizierungsmittel (15, 19) zur Identifizierung des Entnahmemittels (9) und/oder der Brennmittelquelle (5) und/oder des mobilen Verbrauchers (1, 1') aufweist.

4. Anordnung nach Anspruch 1,
**dadurch gekennzeichnet,**
**daß** das Entnahmemittel (9) zusätzlich eine Brennmittelabsaugung (14) aufweist.

5. Anordnung nach Anspruch 1,
**dadurch gekennzeichnet,**
**daß** das Entnahmemittel (9) zusätzlich eine Abgasabsaugung aufweist.

6. Anordnung nach Anspruch 1,
**dadurch gekennzeichnet,**
**daß** das Registriermittel (11) und/oder das Entnahmemittel (9) und/oder das Aufnahmemittel (17, 17') mit einem Regelsystem verbunden ist, welches einen Strombedarf eines stationären Verbrauchers (6) und eine Verfügbarkeit einer elektrischen Leistung durch mobilen Verbrauchern (1, 1') erfaßt und/oder regelt.

7. Anordnung nach Anspruch 1,
**dadurch gekennzeichnet,**
**daß** der mobile Verbraucher (1, 1') einen Zählmittel aufweist, um eine abgegebene elektrische Leistung und/oder eine aufgenommene Brennmittelmenge zu registrieren.

8. Anordnung nach Anspruch 1,
**dadurch gekennzeichnet,**
**daß** die Brennmittelquelle (5) Brennmittel (3) zur Versorgung eines stationären Verbrauchers (6) mit Wärme und/oder Strom enthält.

9. Anordnung nach Anspruch 1,
**dadurch gekennzeichnet,**
**daß** zum Anschluß zwischen zwei Mitteln zur Stromabgabe (17, 17') von zwei mobilen Verbrauchern (1, 1') ein korrespondierendes Verbindungsstück (20) vorgesehen ist.

10. Anordnung nach Anspruch 9,
**dadurch gekennzeichnet,**
**daß** bei Zusammenschluß von zwei mobilen Verbrauchern (1, 1') ein Bremssignal über die Aufnahmemittel (17, 17') übertragbar ist.
